# EUROPÄISCHE PATENTANMELDUNG

(11) **EP 3 315 818 A1**
(43) Veröffentlichungstag der Anmeldung: **02.05.2018**
(21) Anmeldenummer: 17195654.3
(22) Anmeldetag: 10.10.2017
(51) Int. Cl.: F16H 1/22

(54) **RADGETRIEBE**

(30) Priorität: 28.10.2016 DE 102016221357
(71) Anmelder: Deere & Company, Moline, IL 61265 (US)
(72) Erfinder: Moscoso, Javier J, 68163 Mannheim (DE)
(74) Vertreter: Reichert, Christian

(57) **Zusammenfassung**

Ein Radgetriebe (8), für ein Antriebsrad eines landwirtschaftlichen Fahrzeugs wird vorgeschlagen. Das Radgetriebe (8) umfasst ein Getriebegehäuse (36), ein am Getriebegehäuse (36) gelagertes Antriebszahnrad (12), ein am Getriebegehäuse (36) gelagertes Abtriebszahnrad (14), ein erststufiges Zwischenzahnradpaar (18) mit einem ersten und einem zweiten erststufigen Zwischenzahnrad (22, 24) mit jeweils einem ersten Zwischenzahnraddurchmesser und ein zweitstufiges Zwischenzahnradpaar (20) mit einem ersten und einem zweiten zweitstufigen Zwischenzahnrad (26, 28) mit jeweils einem zweiten Zwischenzahnraddurchmesser. Das erststufige Zwischenzahnradpaar (18) steht mit dem Antriebszahnrad (12) in Eingriffsverbindung und das zweite Zwischenzahnradpaar (20) steht mit dem Abtriebszahnrad (14) in Eingriffsverbindung, wobei das erste Zwischenzahnrad (22) des erststufigen Zwischenzahnradpaars (18) und das erste Zwischenzahnrad (26) des zweitstufigen Zwischenzahnradpaars (20) zueinander drehfest auf einer am Getriebegehäuse (36) drehbar gelagerten ersten Zwischenzahnradwelle (30) angeordnet sind und wobei das zweite Zwischenzahnrad (24) des erststufigen Zwischenzahnradpaars (18) und das zweite Zwischenzahnrad (28) des zweitstufigen Zwischenzahnradpaars (20) zueinander drehfest auf einer am Getriebegehäuse (36) drehbar gelagerten zweiten Zwischenzahnradwelle (32) angeordnet sind.

## Beschreibung

Die Erfindung betrifft ein Radgetriebe, für ein Antriebsrad eines landwirtschaftlichen Fahrzeugs, mit einem Getriebegehäuse, einem am Getriebegehäuse gelagerten Antriebszahnrad, einem am Getriebegehäuse gelagerten Abtriebszahnrad, einem erststufigen Zwischenzahnradpaar mit einem ersten und einem zweiten erststufigen Zwischenzahnrad mit jeweils einem ersten Zwischenzahnraddurchmesser und einem zweitstufigen Zwischenzahnradpaar mit einem ersten und einem zweiten zweitstufigen Zwischenzahnrad mit jeweils einem zweiten Zwischenzahnraddurchmesser.

Im Stand der Technik sind Radgetriebe bekannt. Diese dienen dazu, relativ hohe Drehzahlen einer Antriebswelle für ein Fahrzeugrad in hohe Drehmoment am Fahrzeugrad umzuwandeln. Die gängigsten Radgetriebe sind als Planetengetriebe bekannter Art ausgebildet und zeichnen sich durch eine hohe Flexibilität in Drehzahl und Drehmoment aber auch durch ihr günstiges Verhältnis von Leistung zu Bauvolumen aus. Nachteilig sind eine hohe Teilevielfalt und Kosten. Andere Lösungen, beispielsweise einstufige Getriebe mit einer Momententeilung, sind ebenfalls bekannt. Dabei wird ein Antriebsstrang durch ein Zwischenzahnradpaar in zwei parallel geführte Antriebsstränge aufgeteilt, wobei jedes Zwischenzahnrad gleichzeitig direkt mit einem Antriebszahnrad und einem Abtriebszahnrad in Eingriffsverbindung steht. Hiermit sind zwar relativ große und mit Planetengetrieben vergleichbare Drehmomente erzielbar, derartige Getriebeanordnungen sind jedoch aufgrund der baulich bedingt einstufigen hohen Übersetzungsrate anfällig für Schäden an den beteiligten Zahnrädern, insbesondere am relativ großen Abtriebsrad.

Die der Erfindung zugrunde liegende Aufgabe wird darin gesehen, ein Radgetriebe zu schaffen, welches zum einen ein gegenüber Planetengetrieben geringere Teilevielfalt und dennoch ein relativ günstiges Verhältnis von Leistung und Bauvolumen sowie eine geringere Schadensanfälligkeit aufweist.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird ein Radgetriebe der eingangs genannten Art derart ausgebildet, dass das erststufige Zwischenzahnradpaar mit dem Antriebszahnrad in Eingriffsverbindung steht und das zweite Zwischenzahnradpaar mit dem Abtriebszahnrad in Eingriffsverbindung steht, wobei das erste Zwischenzahnrad des erststufigen Zwischenzahnradpaars und das erste Zwischenzahnrad des zweitstufigen Zwischenzahnradpaars zueinander drehfest auf einer am Getriebegehäuse drehbar gelagerten ersten Zwischenzahnradwelle angeordnet sind und wobei das zweite Zwischenzahnrad des erststufigen Zwischenzahnradpaars und das zweite Zwischenzahnrad des zweitstufigen Zwischenzahnradpaars zueinander drehfest auf einer am Getriebegehäuse drehbar gelagerten zweiten Zwischenzahnradwelle angeordnet sind. Die vorgeschlagene Lösung stellt somit antriebsseitig eine vorteilhafte Antriebsmomentteilung dar, wobei die Momentenübertragung in zwei parallelen Antriebssträngen erfolgt. Die vom Antriebsrad auf die Zwischenzahnräder und von dort auf das Abtriebszahnrad wirkenden Umwälzkräfte beim Kämmen der beteiligten Zahnräder können so halbiert werden. Durch die Anordnung eines erst- und eines zweitstufigen Zwischenzahnradpaars wird eine zweistufige Getriebeanordnung geschaffen, die eine zweistufige Übersetzung und damit insgesamt eine geringere Belastung der einzelnen Zahnräder und insbesondere des Abtriebszahnrads ermöglicht. Durch die Ausbildung einer zweiten Übersetzungsstufe mit Zwischenzahnradpaaren kann eine kompaktere Anordnung von Antriebsrad, Zwischenzahnrädern und Abtriebszahnrad erzielt werden. Insgesamt kann zum einen das Bauvolumen günstig gering gehalten und zum anderen die Schadensanfälligkeit reduziert werden. Durch die Anordnung von zwei Übersetzungsstufen, sowie durch die Momententeilung können insgesamt hohe Kräfte und damit auch hohe Lasten aufgenommen werden, die im Leistungsbereich von Planetengetrieben liegen.

Der erste Zwischenzahnraddurchmesser ist vorzugsweise größer ausgebildet als der zweite Zwischenzahnraddurchmesser, wobei sich Antriebszahnrad und Abtriebszahnrad in radialer Richtung überlappen. Durch eine derartige Ausgestaltung ist eine hochkompakte Bauweise gegeben, da insbesondere auch das Antriebszahnrad den Rand des Abtriebszahnrads überlappen und der Abstand zwischen einer Antriebswelle des Antriebszahnrads und einer Abtriebswelle des Abtriebszahnrads insgesamt reduziert werden kann.

In einer weiteren Ausgestaltungsform kann das erststufige Zwischenzahnradpaar und das zweitstufige Zwischenzahnradpaar unterschiedliche Zahnradmodule aufweisen. Dadurch können die Verzahnungen an der Antriebsseite unterschiedlich zu den Verzahnungen der Abtriebsseite gewählt werden, so dass insgesamt Belastungsgrenzen erhöht bzw. optimiert ausgelegt werden können und eine insgesamt größere Variabilität hinsichtlich der Leistungseigenschaften und Schadensanfälligkeit geschaffen wird.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Querschnittsansicht eines Radgetriebes,
- Fig. 2: eine schematische Perspektivansicht einer Zahnräderanordnung des Radgetriebes Figur 1 aus antriebsseitiger Sicht,
- Fig. 3: eine schematische Ansicht der Zahnräderanordnung aus Figur 2 von der Seite,
- Fig. 4: eine schematische Ansicht der Zahnräderanordnung aus Figur 2 von unten,
- Fig. 5: eine schematische Seitenansicht der Zahnräderanordnung aus Figur 2 aus antriebsseitiger Sicht und
- Fig. 6: eine schematische Seitenansicht der Zahnräderanordnung aus Figur 1 aus abtriebsseitiger Sicht.

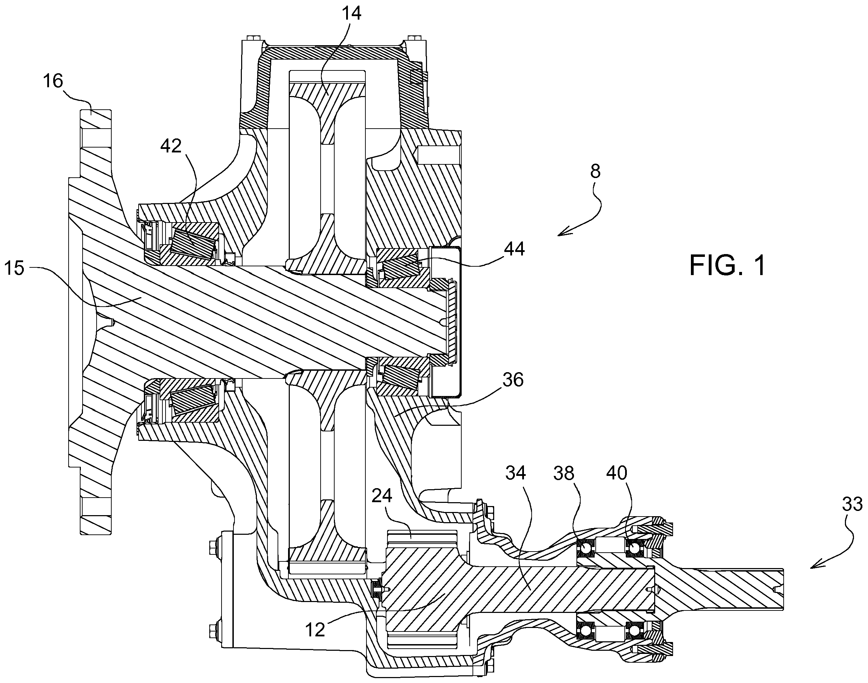

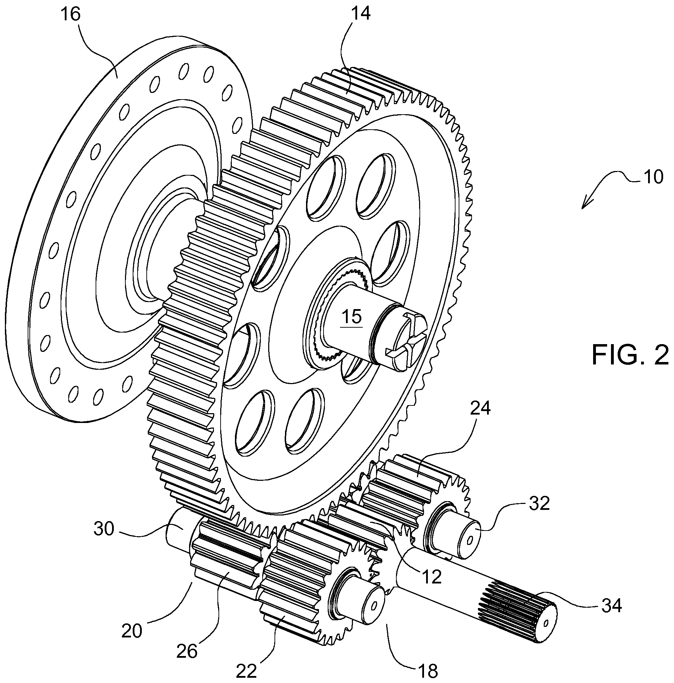

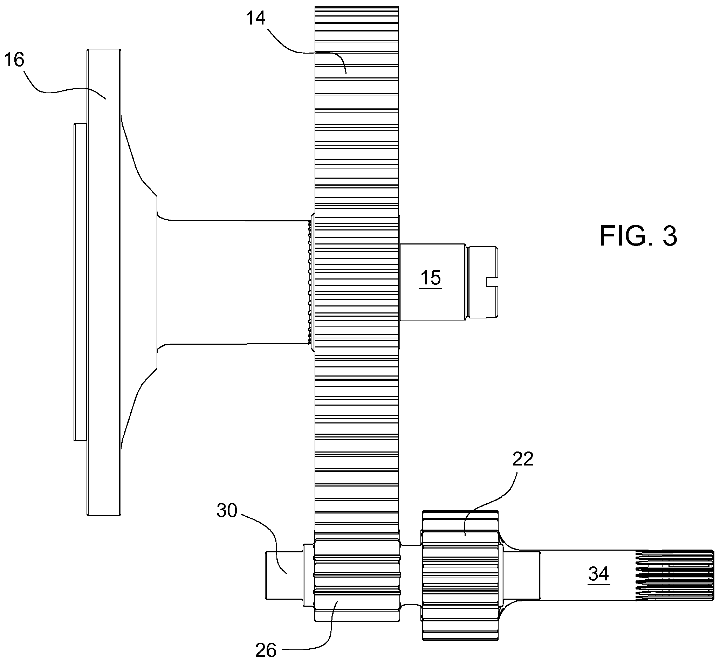

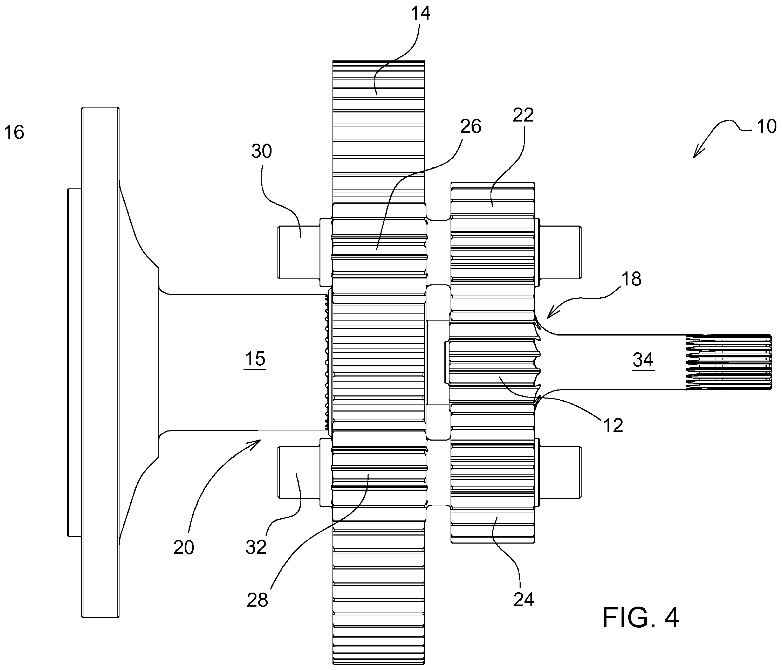

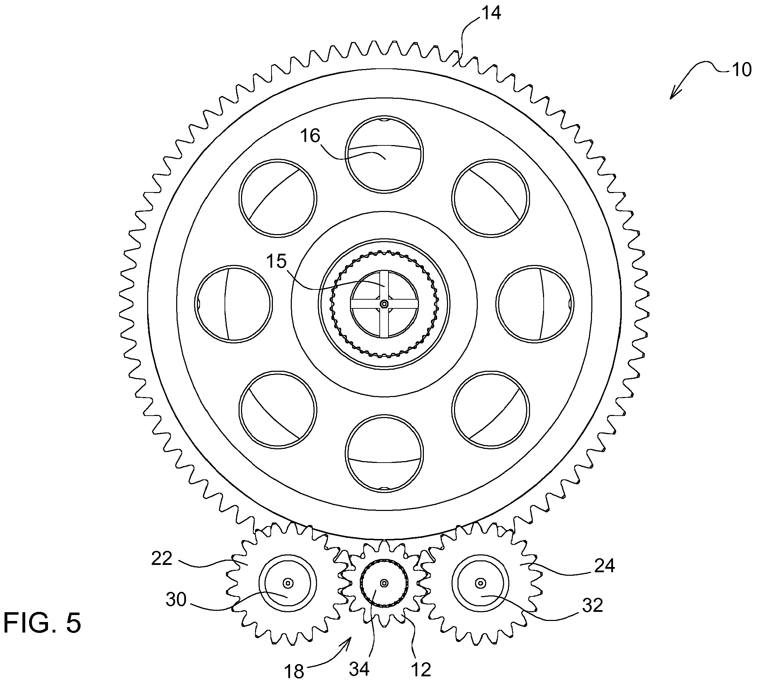

Ein in Figur 1 dargestelltes Radgetriebe 8 zeigt eine Zahnräderanordnung 10, die in den Figuren 2 bis 6 näher im Detail dargestellt ist. Die Zahnräderanordnung 10 umfasst ein Antriebszahnrad 12, ein Abtriebszahnrad 14 und einen über eine Abtriebswelle 15 mit dem Abtriebszahnrad 14 verbundenen Radflansch 16. Zwischen dem Antriebszahnrad 12 und dem Abtriebszahnrad 14 ist ein erststufiges Zwischenzahnradpaar 18 und ein zweitstufiges Zwischenzahnradpaar 20 angeordnet, wobei das erststufige Zwischenzahnradpaar 18 zusammen mit dem Antriebszahnrad 12 eine erste Übersetzungsstufe und das zweitstufige Zwischenzahnradpaar 20 zusammen mit dem Abtriebszahnrad 14 eine zweite Übersetzungsstufe darstellt. Das erststufige Zwischenzahnradpaar 18 umfasst ein mit dem Antriebszahnrad 12 kämmendes erstes und zweites Zwischenzahnrad 22, 24, wobei das erste und zweite Zwischenzahnrad 22, 24 auf gegenüberliegenden Seiten des Antriebszahnrads 12 angeordnet sind. Das zweitstufige Zwischenzahnradpaar 20 umfasst ein mit dem Abtriebszahnrad 14 kämmendes erstes und zweites Zwischenzahnrad 26, 28. Das erste Zwischenzahnrad 22 des erststufigen Zwischenzahnradpaars 18 und das erste Zwischenzahnrad 26 des zweitstufigen Zwischenzahnradpaars 20 sind auf einer gemeinsamen ersten Zwischenzahnradwelle 30 drehfest zueinander angeordnet. Das zweite Zwischenzahnrad 24 des erststufigen Zwischenzahnradpaars 18 und das zweite Zwischenzahnrad 28 des zweitstufigen Zwischenzahnradpaars 20 sind auf einer gemeinsamen zweiten Zwischenzahnradwelle 32 drehfest zueinander angeordnet. Das Antriebszahnrad 12 ist auf einer von einem Antriebsstrang 33 eines Fahrzeugs (nicht gezeigt) angetriebenen Antriebswelle 34 angeordnet, wobei in dem dargestellten Ausführungsbeispiel das Antriebsrad 12 und die Antriebswelle 34 einstückig ausgebildet sind. Durch die Anordnung von Zwischenzahnradpaaren 18, 20 mit jeweils zwei Zwischenzahnrädern 22, 24 und 26, 28 erfolgt eine Drehmomententeilung bzw. eine Leistungsverzweigung des Antriebsmoments seitens des Antriebsstrangs 33 bzw. der Antriebswelle 34, was zu einer Aufteilung der an den beteiligten Zahnrädern 12, 14, 22, 24, 26, 28 des Radgetriebes 8 wirkenden Umwälzkräfte und Drehmomente resultiert.

Wie in Figur 1 dargestellt ist, umfasst das Radgetriebe 8 ein Getriebegehäuse 36 sowie Lagerstellen mit Wellenlager 38, 40 für die Antriebswelle 12 und Lagerstellen mit Wellenlager 42, 44 für die Abtriebswelle 15. Weitere Lagerstellen (nicht gezeigt) sind für die Zwischenzahnradwellen 30, 32 der Zwischenzahnradpaare 18, 20 vorgesehen.

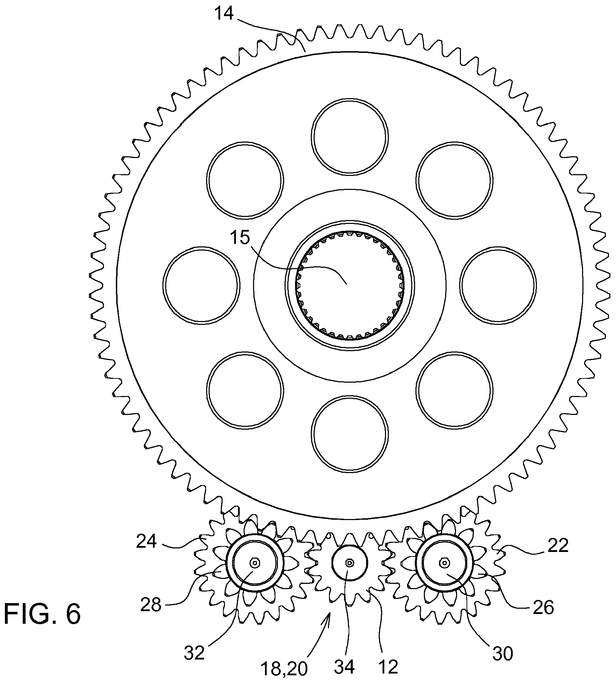

Wie in den Abbildungen 2 bis 6 zu sehen ist, ist das Antriebszahnrad 12 mittig zwischen den beiden erststufigen Zwischenzahnrädern 22, 24 angeordnet. Ein wesentlicher Vorteil gegenüber einer einstufigen Ausgestaltung einer Zahnräderanordnung mit nur einem Zwischenzahnradpaar ist, dass hier bei der zweistufigen Zwischenzahnradanordnung das erststufige Zwischenzahnradpaar 18 axial vor dem Abtriebszahnrad 14 angeordnet ist. Die Zwischenzahnräder 22, 24 des erststufigen Zwischenzahnradpaars 18 können dadurch größere Durchmesser aufweisen als die Zwischenzahnräder 26, 28 des zweitstufigen Zwischenzahnradpaars 20. Ferner wird dadurch auch eine Überlappung des Antriebszahnrads 12 mit dem Abtriebszahnrad 14 ermöglicht, wobei eine Gesamtübersetzung in zwei Stufen mit den zwei verschiedenen Zwischenzahnradpaaren 18, 20, erzielt wird. Die Überlappung sorgt für eine maximal kompakte Bauform der Zahnräderanordnung 10, so dass die Antriebswelle 34 und die Abtriebswelle 15 möglichst eng zueinander angeordnet sind. Es wird ferner ermöglicht, dass die Zwischenzahnräder 22, 24 und das Antriebszahnrad 12 ein Zahnradmodul aufweisen, welches zu einem Zahnradmodul der Zwischenzahnräder 26, 28 und des Abtriebsrads 14 verschieden ist, wie insbesondere in der Figur 6 zuerkennen ist.

## Patentansprüche

1. Radgetriebe (8), für ein Antriebsrad eines landwirtschaftlichen Fahrzeugs, mit einem Getriebegehäuse (36), einem am Getriebegehäuse (36) gelagerten Antriebszahnrad (12), einem am Getriebegehäuse (36) gelagerten Abtriebszahnrad (14), einem erststufigen Zwischenzahnradpaar (18) mit einem ersten und einem zweiten erststufigen Zwischenzahnrad (22, 24) mit jeweils einem ersten Zwischenzahnraddurchmesser und einem zweitstufigen Zwischenzahnradpaar (20) mit einem ersten und einem zweiten zweitstufigen Zwischenzahnrad (26, 28) mit jeweils einem zweiten Zwischenzahnraddurchmesser, **dadurch gekennzeichnet, dass** das erststufige Zwischenzahnradpaar (18) mit dem Antriebszahnrad (12) in Eingriffsverbindung steht und das zweite Zwischenzahnradpaar (20) mit dem Abtriebszahnrad (14) in Eingriffsverbindung steht, wobei das erste Zwischenzahnrad (22) des erststufigen Zwischenzahnradpaars (18) und das erste Zwischenzahnrad (26) des zweitstufigen Zwischenzahnradpaars (20) zueinander drehfest auf einer am Getriebegehäuse (36) drehbar gelagerten ersten Zwischenzahnradwelle (30) angeordnet sind und wobei das zweite Zwischenzahnrad (24) des erststufigen Zwischenzahnradpaars (18) und das zweite Zwischenzahnrad (28) des zweitstufigen Zwischenzahnradpaars (20) zueinander drehfest auf einer am Getriebegehäuse (36) drehbar gelagerten zweiten Zwischenzahnradwelle (32) angeordnet sind.

2. Radgetriebe (8) nach Anspruch 1, **dadurch gekennzeichnet, dass** der erste Zwischenzahnraddurchmesser größer ist als der zweite Zwischenzahnraddurchmesser und sich Antriebszahnrad (12) und Abtriebszahnrad (14) in radialer Richtung überlappen.

3. Radgetriebe (8) nach Anspruch 1 oder 2, **dadurch gekennzeichnet, dass** das erststufige Zwischenzahnradpaar (18) und das zweitstufige Zwischenzahnradpaar (20) unterschiedliche Zahnradmodule aufweisen.
